# EUROPÄISCHE PATENTSCHRIFT

(11) **EP 0 577 941 B1**
(45) Veröffentlichungstag und Bekanntmachung des Hinweises auf die Patenterteilung: **14.04.1999**
(21) Anmeldenummer: 93107032.0
(22) Anmeldetag: 30.04.1993
(51) Int. Cl.: B01D 29/15, B01D 29/48, B01D 29/64, B01D 29/68, B01D 33/073, B01D 33/46, B01D 33/50

(54) **Rückspülbares Flüssigkeitsfilter**
Backwash liquid filter
Filtre de liquide à lavage à contre-courant

(30) Priorität: 09.07.1992 DE 4222495
(43) Veröffentlichungstag der Anmeldung: 12.01.1994
(73) Patentinhaber: FILTERWERK MANN & HUMMEL GMBH, 71631 Ludwigsburg (DE)
(72) Erfinder: Bartelt, Bertram, 7144 Steinheim (DE); Koebbert, Klaus, 5164 Nörvenich (DE); Schaal, Wolfgang, 7150 Backnang (DE)
(74) Vertreter: Voth, Gerhard, Dipl.-Ing.

(56) Entgegenhaltungen:
- EP-A- 0 049 746
- EP-A- 0 504 765
- US-A- 1 950 466

## Beschreibung

Die Erfindung betrifft ein rückspülbares Flüssigkeitsfilter nach dem Oberbegriff des Anspruchs 1.

Aus der DE-A-32 09 216 ist ein abschnittsweise rückspülbares Flüssigkeitsfilter bekannt, bei dem ein hohlzylindrisches Filterelement vorgesehen ist. Dieses trennt innerhalb eines Filtergehäuses einen Filtratraum von einem Schmutzflüssigkeitsraum ab. Das Flüssigkeitsfilter enthält ferner eine Schmutzabfuhrrinne, die parallel zur Achse des Filterelementes angeordnet ist und einen U-förmigen Querschnitt aufweist.

Zum Abreinigen der Oberfläche des Flüssigkeitsfilters wird dieser um seine Achse gedreht und der Schmutzabfuhrkanal geöffnet, so daß aufgrund des im Inneren des hohlzylindrischen Filterelementes herrschenden Drucks Flüssigkeit durch das an der Oberfläche des Filterelementes angeordnete Filtergewebe strömt. Die an dem Filtergewebe anhaftenden Partikel werden durch die Strömung mitgenommen und über einen Schmutzabfuhrkanal abgeleitet.

Normalerweise läßt sich die Größe der in der zu reinigenden Flüssigkeit enthaltenen Partikel nicht exakt definieren. So können unter Umständen auch Partikel angeschwemmt werden, die ein Mehrfaches der Filterspaltweite aufweisen. Die Abreinigung solcher Partikel mit der bekannten Rückspüleinrichtung wird dadurch erschwert, daß diese Rückspüleinrichtung einerseits einen möglichst geschlossenen und nur zu dem Filterbereich geöffneten U-förmigen Querschnitt aufweist, andererseits aber auch größere Partikel am Umfang des Filterelementes in die Schmutzabfuhrrinne hineingelangen sollen. Dadurch ergibt sich an der Vorderkante der Schmutzabfuhrrinne ein nicht unerheblicher Spalt, durch den aus dem Schmutzflüssigkeitsraum Flüssigkeit in die Schmutzabfuhrrinne gelangt. Damit wird die Rückspülwirkung an dem Filterelement wesentlich herabsetzt.

Es ist weiterhin aus der EP-A-00 49 746 B1 ein Spaltfilter für Schmieröl bekannt, welches mit einem Reinigungselement versehen ist. Das Reinigungselement weist einen Spülkanal auf und besitzt zum einen zu der Filteroberfläche hin gewandte Öffnungen zum Rückspülen des Spaltfilters sowie einen Eintrittsspalt zum Vorreinigen der Filteroberfläche. Mit diesem Reinigungselement soll damit zum einen Grobschmutz mittels des Eintrittspalts entfernt werden, sowie der in den Filterspalten angelagerte Schmutz über die Rückspülöffnungen.

Ein Nachteil dieses Systems besteht darin, daß durch die Anordnung des Eintrittsspalts für Grobschmutz die Rückspülwirkung sehr stark vermindert wird.

Das Reinigungselement, das zwar eine kompakte Kombination darstellt, hat jedoch den Nachteil, daß Schmutz unterschiedlicher Zusammensetzung nicht wirksam entfernt werden kann. So ist einerseits der Eintrittsspalt möglichst klein zu halten, um die Rückspülwirkung nicht unnötig zu beeinflussen. Andererseits hat ein kleinerer Eintrittsspalt den Nachteil, daß Grobschmutz sich vor dem Reinigungsspalt ablagert und nicht mit ausgetragen werden kann.

Die geringe Rückspülwirkung des Reinigungselements wird dadurch noch weiter herabgesetzt, daß ein sehr breiter Umfangsbereich des Filters rückgespült wird und damit sich die Geschwindigkeit der Rückspülströmung stark verringert.

Es ist weiterhin aus der US-A-1 950 466 eine Abreinigung bekannt, bei der ein spezieller Sprühstrahl über einen Schlitz erzeugt wird. Dieser Sprühstrahl treibt den vorhandenen Schmutz aus und führt ihn zu einer Schmutzaustragsvorrichtung. Eine Abreinigung von Grobschmutz kann durch den Sprühstrahl nicht erfolgen.

Der Erfindung liegt deshalb die Aufgabe zugrunde, ein rückspülbares Flüssigkeitsfilter zu schaffen, das die genannten Nachteile vermeidet und mit dem Schmutzflüssigkeit, die mit Partikel unterschiedlichster Größe belastet ist, gefiltert wird und eine wirksame Abreinigung des Filterelementes erfolgt.

Diese Aufgabe wird ausgehend von dem Oberbegriff des Hauptanspruchs durch dessen kennzeichnende Merkmale gelöst.

Ein wesentlicher Vorteil der Erfindung ist darin zu sehen, daß nunmehr eine zweistufige Abreinigung der Oberfläche des Filterelementes enfolgt. Zunächst wird die Oberfläche mit dem federnd vorgelagerten Abstreifer von grobem Oberflächenschmutz gereinigt. Dadurch wird gewährleistet, daß der Schmutzabfuhrkanal unmittelbar und ohne einen Umgehungsspalt für die Schmutzflüssigkeit zu bilden, an dem Filterelement anliegt. Der restliche am Filterelement und vor allem in den sehr feinen Filteröffnungen festsitzende Schmutz kann dann mittels Rückspülflüssigkeit durch eine Öffnung in den Schmutzabfuhrkanal gelangen. Es ist verständlich, daß gerade eine kleine Öffnung den Vorteil hat, zur Rückspülung des Filterelementes nur wenig Rückspülflüssigkeit zu benötigen.

Außerdem wird eine hohe Geschwindigkeit der Rückspülströmung erzeugt und damit durch die größere kinetische Energie eine bessere Reinigungswirkung erzielt.

Gemäß einer Ausgestaltung der Erfindung besteht diese Öffnung aus einer parallel zur Achse des Filterelementes durchlaufende Nut. Die Breite der Nut ist maßgebend für die erforderliche Rückspülflüssigkeitsmenge und kann aufgrund der Vorreinigung sehr schmal eingestellt werden.

In einer weiteren Ausgestaltung ist vorgesehen, diese Nut mittels Stützen am rückwärtigen Ende des Schmutzabfuhrkanals abzusichern. Diese Stützen verhindern ein Verformen des Schmutzabfuhrkanals im Bereich dieser Nut.

Eine alternative Ausgestaltung der Öffnung zu der Oberfläche des Filterelementes sieht vor, mehrere in Umfangsrichtung versetzt angeordnete Nuten, die ebenfalls parallel zur Achse des Filterelementes verlaufen, anzuordnen. Durch die versetzte Anordnung der Nuten wird eine stabile Anlagefläche des Schmutzabfuhrkanals an der Oberfläche des Filterelementes erzielt.

Gemäß einer Ausgestaltung der Erfindung ist der vorgelagerte Abstreifer ein Federstahlblech, dessen Kontaktfläche auf der Oberfläche des Filterelementes parallel zur Achse des Filterelementes verläuft. Dieses Federstahlblech kann mit einer Messerschneide versehen sein. Diese Messerschneide dient dazu, Fasern oder Schmutzpartikel, die sehr fest auf der Oberfläche des Filterelementes anhaften, abzuscheren.

Das Filterelement kann sowohl ein Spaltrohrfilter als auch ein Plattenspaltfilter sein. Bei einem Spaltrohrfilter ist auf einem Stützkörper eine Drahtwicklung aufgebracht, wobei die einzelnen Windungen einen Abstand aufweisen, der die zu filtrierende Partikelgröße definiert.

Bei einem Plattenspaltfilter sind einzelne Platten mit Abstandszwischenlagen übereinander gestapelt, wobei die Zwischenlagen die Spaltweite definieren.

Bei einem Plattenspaltfilter besteht gemäß einer weiteren Ausgestaltung der Erfindung die Möglichkeit, dieses durch Spalträumer zu reinigen. Die Spalträumer sind feststehend angeordnet. Bei Drehung des Filterelementes bewirken diese Spalträumer ein Entfernen des Schmutzes in den Zwischenräumen der einzelnen Platten. Selbstverständlich kann ein solcher Spalträumer auch mit einem Abstreifer kombiniert werden.

Eine weitere Ausgestaltung der Erfindung sieht vor, den Flüssigkeitszulauf für die Schmutzflüssigkeit mit einem Zyklon zu versehen. Dieser erzeugt eine Drehströmung der zugeführten Flüssigkeit. Diese Drehströmung wird z. B. dadurch erzielt, daß die Flüssigkeit auf einen im Schmutzflüssigkeitsraum schräg angeordneten Zwischenboden trifft. Durch die Drehströmung gelangen die Grobpartikel an die Außenwand des Schmutzflüssigkeitsraumes und setzen sich auf den Boden des Flüssigkeitsfilters ab.

Die Erfindung wird nachfolgend anhand von Ausführungsbeispielen näher dargestellt. Es zeigt:
Figur 1 die Darstellung der Abreinigung eines Spaltrohrfilters,
Figur 2 eine Schnittdarstellung eines Spaltrohrfilters,
Figur 3 eine Variante einer Rückspüleinrichtung.

Beim Filtrieren verschmutzter Flüssigkeit, z. B. Kühl-Schmierflüssigkeit (Emulsion) von Werkzeugmaschinen, ist es Aufgabe eines Filters, Schmutzteilchen ab einer bestimmten Größe aus der Flüssigkeit herauszufiltern. Die Größe der herauszufilternden Schmutzteilchen hängt im wesentlichen von der Maschenweite oder der Schlitzbreite eines Filters ab.

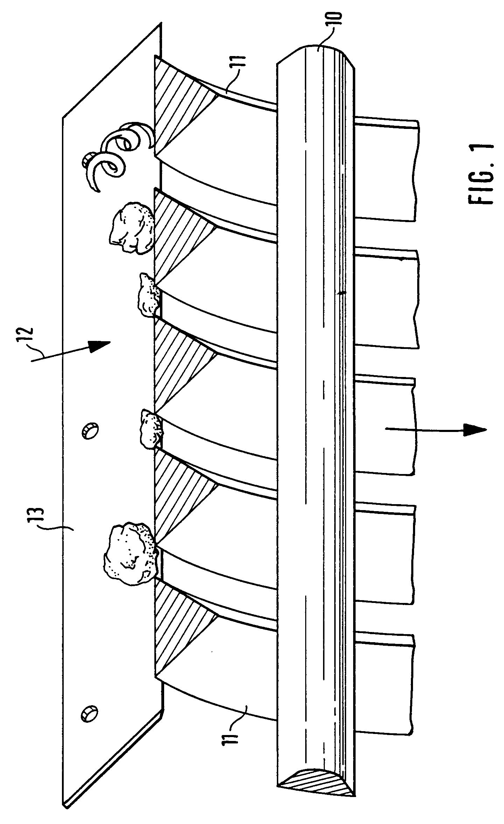

Bei einem Spaltrohrfilter ist, wie in Figur 1 dargestellt, auf Stützstäben, von denen in Figur 1 lediglich ein Stützstab 10 gezeigt ist, ein dreieckförmiger Profildraht gewickelt und an den Stützstäben 10 über Schweißverbindungen befestigt. Der Abstand zwischen den einzelnen Drahtwindungen definiert die Spaltbreite des Filters und beträgt beispielsweise 0,1 mm. Die Schmutzflüssigkeit strömt von außen in Richtung des Pfeils 12. Die Schmutzteilchen lagern sich an der Oberfläche der Profildrahtwicklung an. Die gereinigte Flüssigkeit wird durch den Innenraum des Filters abgeführt.

Zum Reinigen der Oberfläche des Filters ist das gesamte Filterelement drehbar in einem Gehäuse gelagert. Ein stationär angeordneter Abstreifer 13 entfernt bei einer Drehung des Filterelementes die Schmutzteilchen, soweit dieser sie erfassen kann. Insbesondere die Schmutzteilchen, deren Größe etwa der Spaltbreite entspricht, bleiben jedoch im Spalt hängen. Außerdem werden Späne oder Fasern, die teilweise durch den Spalt gelangt sind, in der Spaltebene abgeschert. Ein Teil dieser Späne oder Fasern bleibt ebenfalls im Spalt zurück.

Diese im Spalt befindlichen Schmutztei lchen werden durch das Rückspülen des Filters entfernt. Das Rückspülen erfolgt dadurch, daß gereinigte Flüssigkeit in umgekehrter Flußrichtung durch den Spalt strömt und dabei die restlichen Schmutzteilchen mitnimmt und in einen Schmutzabfuhrkanal führt.

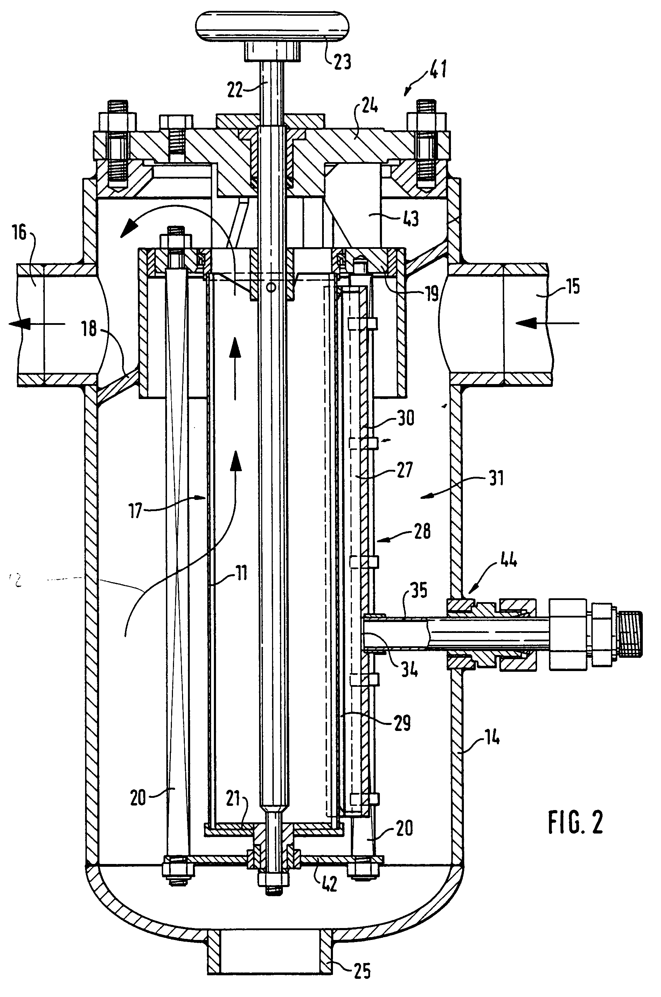

Die Schnittdarstellung des gesamten Aufbaus eines Spaltrohrfilters zeigt Figur 2. Ein Filtergehäuse 14 weist einen Zulauf 15 für die zu reinigende Flüssigkeit und einen Ablauf 16 auf. Zwischen Zulauf und Ablauf befindet sich ein Filtereinsatz 31.

Der Filtereinsatz 31 besteht aus dem Filterelement 17, welches mit einer hier nur schematisch angedeuteten Profildrahtwicklung 11 versehen ist, und einem Filterkopf. Im Filtergehäuse 14 ist eine Trennwand 18 angeordnet. Diese Trennwand befindet sich zwischen dem Rohflüssigkeits- und dem Reinflüssigkeitsbereich des Filterelements 17. Das Filterelement 17 ist an seinem oberen Ende mit einer Stützscheibe 19 versehen. An dieser Stützscheibe 19 sind Stehbolzen 20 angeordnet, die an dem unteren Ende eine geschlossene Abdeckscheibe 21 des Filterelements 17 halten. Zwischen der Abdeckscheibe 21 und den Stehbolzen 20 befindet sich eine Lagerscheibe 42, in welcher das Filterelement drehbar gelagert ist. Die Stützscheibe 19 ist über Trägerelemente 43 mit einer Verschlußscheibe 24 verbunden. Diese Elemente bilden gemeinsam den Filterkopf 41.

Die Verschlußscheibe 24 weist eine flüssigkeitsdichte Öffnung für eine Welle 22 auf. Diese Helle dient als Antriebswelle für das Filterelement 17. Die Verschlußscheibe 24 ist mit hier nur schematisch angedeuteten Schraubverbindungen an dem Filtergehäuse 14 befestigt und dichtet die obere öffnung des Filtergehäuses ab.

Am unteren Ende des Filtergehäuses 14 befindet sich ein Schmutzflüssigkeitsauslauf 25, der mit einem hier nicht dargestellten Ventil versehen ist. Dieser Schmutzflüssigkeitsauslauf 25 dient dazu, sich am Boden des Filtergehäuses 14 absetzender grober Schmutzpartikel auszutragen.

Eine Rückspüleinrichtung 28 besteht aus einem Schmutzabfuhrkanal 27, der sich über die gesamte wirksame Länge des Filterelements 17 erstreckt. Der Schmutzabfuhrkanal 27 weist an der zu der Oberfläche des Filterelements 17 gerichteten Seite Nuten 29 auf, durch welche der rückgespülte Schmutz und die Rückspülflüssigkeit in den Schmutzabfuhrkanal 27 gelangen.

In der gezeigten Schnittebene sind lediglich 7 Nuten 29 gezeigt. Die die restliche Fläche des Filterelements 17 abreinigenden Nuten sind in Umfangsrichtung versetzt angeordnet und deshalb hier nicht sichtbar.

Die Rückspüleinrichtung 28 ist mit einer rückwärtigen Wand 30 versehen. In dieser Wand befindet sich eine öffnung 34, an welcher ein Auslaufrohr 35 zum Austrag der Rückspülflüssigkeit vorgesehen ist. Dieses Auslaufrohr 35 verläuft durch einen flüssigkeitsdichten Wanddurchbruch 44 des Filtergehäuses 14.

Das Filterelement 17 kann mittels des Handrades 23 gedreht werden. Anstelle des Handrades kann auch ein Getriebemotor, ein pneumatischer oder hydraulischer Antrieb oder auch eine Ratsche angewendet werden. Bei geöffnetem Auslaufrohr 35 wird die gesamte Umfangsfläche des Filterelements gereinigt.

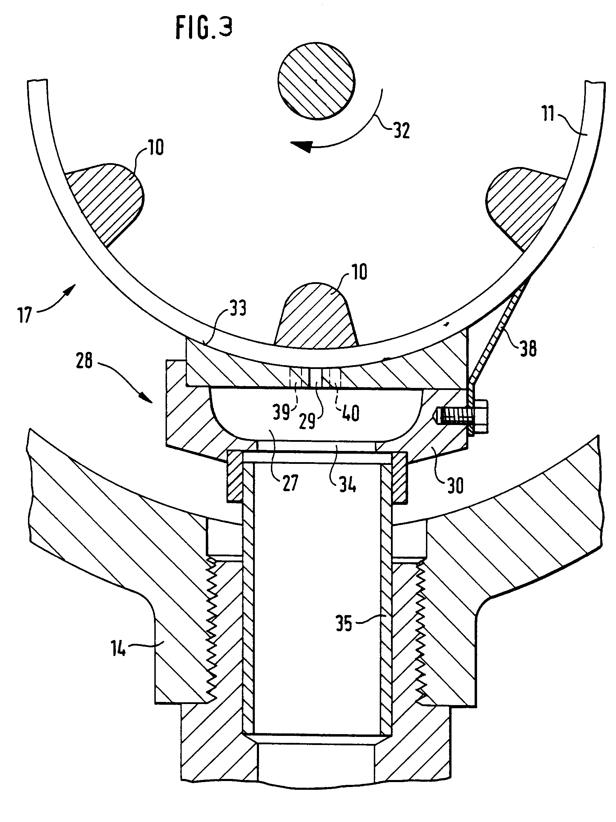

In Figur 3 ist eine Variante einer Rückspüleinrichtung dargestellt. An der Wand 30 ist ein Abstreifer 38 befestigt. Dieser Abstreifer besteht beispielsweise aus Federstahlblech und ist an seinen dem Filterelement zugewandten Enden schneidenförmig ausgestaltet. Der Abstreifer liegt federnd an der Oberfläche des Filterelementes an und übernimmt damit das grobe Abreinigen der Oberfläche. Eine Feder ist bei dieser Ausführung nicht erforderlich, da die sichere Anlage der Rückspüleinrichtung am Filterelement 17 durch eine justierbare Befestigung an der Stützscheibe 19 und an der Lagerscheibe 42 erfolgt.

Als weitere Besonderheit sind bei dieser Rückspüleinrichtung mehrere Nuten 29, 39, 40 angeordnet. Jede dieser Nuten erstreckt sich über eine Teillänge des Filterelementes. Diese Nuten sind sowohl in Umfangsrichtung als auch in Axialrichtung des Filterelementes versetzt angeordnet und sorgen für eine höhere Stabilität der Wand 33, so daß die an anderer Stelle aufgeführten Stützen entfallen können.

## Patentansprüche

1. Rückspülbares Flüssigkeitsfilter mit einem um seine Achse drehbaren, radial durchströmten, hohlzylindrischen Filtereinsatz, der innerhalb eines Filtergehäuses einen Filtratraum von einem Schmutzflüssigkeitsraum abtrennt, mit einer ortsfesten, einen Schmutzabfuhrkanal aufweisenden, parallel zur Achse des Filterelementes angeordneten Rückspüleinrichtung, wobei der Schmutzabfuhrkanal über ein Absperrventil an eine Schmutzabfuhrleitung anschließbar ist und eine Antriebsvorrichtung für den Filtereinsatz vorgesehen ist, wobei der Rückspüleinrichtung (28) ein federnd gelagerter Abstreifer (38) vorgeschaltet ist zum Entfernen des auf der Oberfläche des Filterelementes (17) befindlichen Schmutzes, wobei der Schmutzabfuhrkanal (27) wenigstens eine Öffnung (29) zu der Oberfläche des Filterelementes (17) aufweist, durch welche Rückspülflüssigkeit in den Schmutzabfuhrkanal (27) gelangt und wobei der von dem federnd gelagerten Abstreifer entfernte Grobschmutz sich am Boden des Filtergehäuses absetzt und über einen getrennten Schmutzflüssigkeitsauslauf (25) entnehmbar ist.

2. Flüssigkeitsfilter nach Anspruch 1, dadurch gekennzeichnet, daß die Öffnung (29) zur Oberfläche des Filterelementes (17) eine parallel zur Achse des Filterelementes durchlaufende Nut ist.

3. Flüssigkeitsfilter nach einem der vorherigen Ansprüche, dadurch gekennzeichnet, daß das mit der Nut versehene Element der Rückspüleinrichtung (28) mittels am rückwärtigen Ende des Schmutzabfuhrkanals (27) angeordneten Stützen abgesichert ist.

4. Flüssigkeitsfilter nach Anspruch 1, dadurch gekennzeichnet, daß die öffnung (29) zur Oberfläche des Filterelementes (17) aus mehreren, parallel zur Achse des Filterelementes (17) verlaufende, in Umfangsrichtung versetzt angeordnete Nuten besteht.

5. Flüssigkeitsfilter nach einem der vorherigen Ansprüche, dadurch gekennzeichnet, daß der der Rückspüleinrichtung (28) vorgelagerte Abstreifer (38) ein an der Rückspüleinrichtung (28) befestigtes Federstahlblech ist, dessen Kontaktfläche auf der Oberfläche des Filterelementes (17) parallel zur Achse des Filterelementes verläuft.

6. Flüssigkeitsfilter nach einem der vorherigen Ansprüche, dadurch gekennzeichnet, daß das Federstahlblech mit einer Messerschneide versehen ist, welche Fasern oder Schmutzpartikel auf der Oberfläche des Filterelementes (17) abschert.

7. Flüssigkeitsfilter nach einem der vorherigen Ansprüche, dadurch gekennzeichnet, daß der Filtereinsatz ein Spaltrohrfilter oder ein Plattenspaltfilter ist.

8. Flüssigkeitsfilter nach Anspruch 7, dadurch gekennzeichnet, daß bei einem Plattenspaltfilter ein Reinigen der Filterspalträume mittels Spalträumer und/oder des Abstreifers (13) erfolgt.

9. Flüssigkeitsfilter nach einem der vorherigen Ansprüche, dadurch gekennzeichnet, daß der Flüssigkeitszulauf mit einem Zyklon versehen ist, welcher eine Drehströmung der zugeführten Flüssigkeit erzeugt.

## Claims

1. Back-flushable liquid filter, having a radially traversable, hollow-cylindrical filter insert, which is rotatable about its axis and divides a filtrate chamber from a liquid contaminant chamber inside a filter housing, and having a fixed back-flush arrangement, which comprises a contaminant discharge duct and is disposed parallel to the axis of the filter element, wherein the contaminant discharge duct is connectable to a contaminant discharge line via a shut-off valve, and a driving apparatus is provided for the filter insert, wherein a resiliently mounted scraper (38) is connected upstream of the back-flush arrangement (28) in order to remove the contaminant which is situated on the surface of the filter element (17), wherein the contaminant discharge duct (27) has at least one opening (29) to the surface of the filter element (17), through which opening back-flush liquid passes into the contaminant discharge duct (27), and wherein the coarse contaminant, which is removed by the resiliently mounted scraper, is deposited on the base of the filter housing and can be removed via a separate liquid contaminant outlet (25).

2. Liquid filter according to claim 1, characterised in that the opening (29) to the surface of the filter element (17) is a groove extending parallel to the axis of the filter element.

3. Liquid filter according to one of the previous claims, characterised in that the element of the back-flush arrangement (28) provided with the groove is secured by means of supports disposed on the rearward end of the contaminant discharge duct (27).

4. Liquid filter according to claim 1, characterised in that the opening (29) to the surface of the filter element (17) comprises a plurality of grooves, which extend parallel to the axis of the filter element (17) and are disposed in an offset manner when viewed with respect to the circumferential direction.

5. Liquid filter according to one of the previous claims, characterised in that the scraper (38), which is mounted upstream of the back-flush arrangement (28), is a resilient steel plate secured to the back-flush arrangement (28), the contact face of which plate extends on the surface of the filter element (17) parallel to the axis of the filter element.

6. Liquid filter according to one of the previous claims, characterised in that the resilient steel plate is provided with a knife edge, which cuts away fibres or contaminant particles on the surface of the filter element (17).

7. Liquid filter according to one of the previous claims, characterised in that the filter insert is a slotted tube filter or a slotted plate filter.

8. Liquid filter according to claim 7, characterised in that, in the case of a slotted plate filter, the slotted filter chambers are cleaned by means of slot clearers and/or the scraper (13).

9. Liquid filter according to one of the previous claims, characterised in that the liquid inlet is provided with a cyclone, which produces a rotational flow of the supplied liquid.

## Revendications

1. Filtre à liquides, rinçable à contre-courant, comprenant :
- un insert filtrant en forme de cylindre creux pouvant tourner autour de son axe et traversé radialement par le liquide, cet insert séparant à l'intérieur du boitier de filtre une chambre de filtrat et une chambre des saletés,
- un dispositif fixe de rinçage à contre-courant, monté parallèlement à l'axe de l'élément filtrant et un canal d'évacuation des saletés, ce canal pouvant être raccordé par une soupape d'arrêt à une canalisation d'évacuation des saletés,
- un dispositif d'entraînement de l'insert filtrant,
dans lequel
- en amont du dispositif de rinçage à contre-courant (28) est monté élastiquement un racleur (38) servant à retirer de la surface de l'élément filtrant (17) les saletés qui s'y trouvent,
- le canal (27) d'évacuation des saletés comporte au moins une ouverture (29) débouchant sur la surface de l'élément filtrant (17), par laquelle le liquide de rinçage à contre-courant parvient au canal (27),
- les grosses saletés retirées par la racleur monté élastiquement se déposent sur le fond du boitier de filtre et peuvent être évacuées par une sortie séparée (25).

2. Filtre selon la revendication 1,
caractérisé en ce que
l'ouverture (29) débouchant sur la surface de l'élément filtrant (17) est une rainure s'étendant parallèlement à l'axe de l'élément.

3. Filtre selon une des revendications précédentes,
caractérisé en ce que
la partie du dispositif de rinçage (28) qui présente la rainure est protégée par une tubulure montée à l'extrémité arrière de canal (27) d'évacuation des saletés.

4. Filtre selon la revendication 1,
caractérisé en ce que
l'ouverture (29) débouchant sur la surface de l'élément filtrant (17) est constituée de plusieurs rainures parallèles à l'axe de l'élément (17) et décalées périphériquement.

5. Filtre selon une des revendications précédentes,
caractérisé en ce que
le racleur (38) situé en amont du dispositif (28) de rinçage à contre-courant est constitué par une tôle élastique en acier, fixée sur le dispositif (28) et dont la portée de contact avec la surface de l'élément filtrant (17) est parallèle à l'axe de celui-ci.

6. Filtre selon une des revendications précédentes,
caractérisé en ce que
la tôle élastique en acier présente un tranchant de couteau qui sépare de la surface de l'élément filtrant (17) les fibres et particules de saleté, en les sectionnant.

7. Filtre selon une des revendications précédentes,
caractérisé en ce que
l'insert filtrant est un filtre tubulaire à fentes ou un filtre plan à fentes.

8. Filtre selon la revendication 7,
caractérisé en ce que
dans le cas d'un filtre plan à fentes, le nettoyage des chambres du filtre est assuré par un dragueur de fentes et/ou par le racleur (13).

9. Filtre selon une des revendications précédentes,
caractérisé en ce que
l'amenée du liquide est assurée par un cyclone donnant au liquide un mouvement de rotation.
